# FASCICULE DE BREVET EUROPEEN

(11) **EP 0 775 511 B1**
(45) Date de publication et mention de la délivrance du brevet: **25.09.2002**
(21) Numéro de dépôt: 96402536.5
(22) Date de dépôt: 26.11.1996
(51) Int. Cl.: B01D 1/00, F22B 1/30, H05B 3/60

(54) **Procédé et dispositif de concentration de mélanges fluides par chauffage ohmique.**
Verfahren und Vorrichtung zur Konzentrierung von Fluid-Mischungen durch ohmische Heizung
Process and apparatus for the concentration of fluid mixtures by ohmic heating

(30) Priorité: 27.11.1995 FR 9514008
(43) Date de publication de la demande: 28.05.1997
(73) Titulaire: ELECTRICITE DE FRANCE, 75008 Paris (FR)
(72) Inventeur: Aussudre, Christian, 77670 Saint Mammes (FR)
(74) Mandataire: Martin, Jean-Jacques

(56) Documents cités:
- DE-A- 2 609 276
- DE-C- 610 065
- FR-A- 890 471
- FR-A- 2 211 268

## Description

La présente invention concerne un procédé et un dispositif de concentration d'un mélange fluide, ainsi que les produits concentrés obtenus par ce procédé.

Son domaine d'application est la concentration de liquides contenant une phase non volatile, notamment de l'eau contenant des matières solides en suspension ou en solution, par exemple des effluents d'industries chimiques ou papetières, que l'on cherche à concentrer en vue d'un retraitement.

On connaît des procédés classiques de concentration par évaporation dans lesquels on chauffe des effluents liquides à travers une surface d'échange thermique, par une source de chaleur quelconque.

Un inconvénient notable de ce type de traitement est que la surface d'échange thermique s'encrasse rapidement, surtout si la viscosité du fluide est élevée.

Un autre de ses inconvénients est que les échanges thermiques entre la source et l'effluent se font difficilement, particulièrement si le taux de matières sèches est élevé, ce qui limite l'efficacité du procédé.

D'autre part, dans le domaine de la production de vapeur, on connaît l'utilisation du chauffage ohmique par conduction directe d'un courant électrique dans un volume d'eau. L'énergie électrique se transforme en énergie calorique, par effet Joule, en traversant directement le volume d'eau.

Ces dispositifs de production de vapeur comportent des électrodes immergées dans une eau conditionnée, les électrodes ayant une géométrie calculée correspondant à une conductivité imposée à l'eau.

L'eau ne doit pas ou peu comporter de matières en suspension.

Le document, DE-A-26.09.276 décrit une procédé de concentration d'un solution.

L'objet de la présente invention est de concentrer des mélanges fluides du type précité, d'une façon beaucoup plus efficace que les méthodes utilisées dans l'art antérieur.

De façon inattendue, on utilise la technique du chauffage ohmique telle qu'elle est mise en oeuvre dans certains générateurs de vapeur pour réaliser la concentration de mélanges.

Plus précisément, l'invention concerne un procédé de concentration d'un mélange fluide selon la revendication 1.

Un tel procédé permet la concentration de fluides thermosensibles ou à viscosité très élevée, en particulier la "surconcentration". Il permet, par ailleurs, d'atteindre des rendements élevés.

L'invention concerne aussi un dispositif de mise en oeuvre du procédé. Ce dispositif comprend une enceinte pour contenir le mélange fluide, comprenant un moyen de mise en circulation du mélange fluide, au moins deux électrodes plongées au moins en partie dans le mélange fluide pour réaliser un chauffage ohmique par conduction de courant électrique à travers le mélange fluide en circulation entre les électrodes, et un moyen de réglage du courant électrique en fonction inverse de la résistivité du mélange fluide.

La description qui va suivre et les dessins annexés, donnés surtout à titre d'exemples non limitatifs, feront mieux comprendre comment l'invention est réalisée.

Sur les dessins annexés :

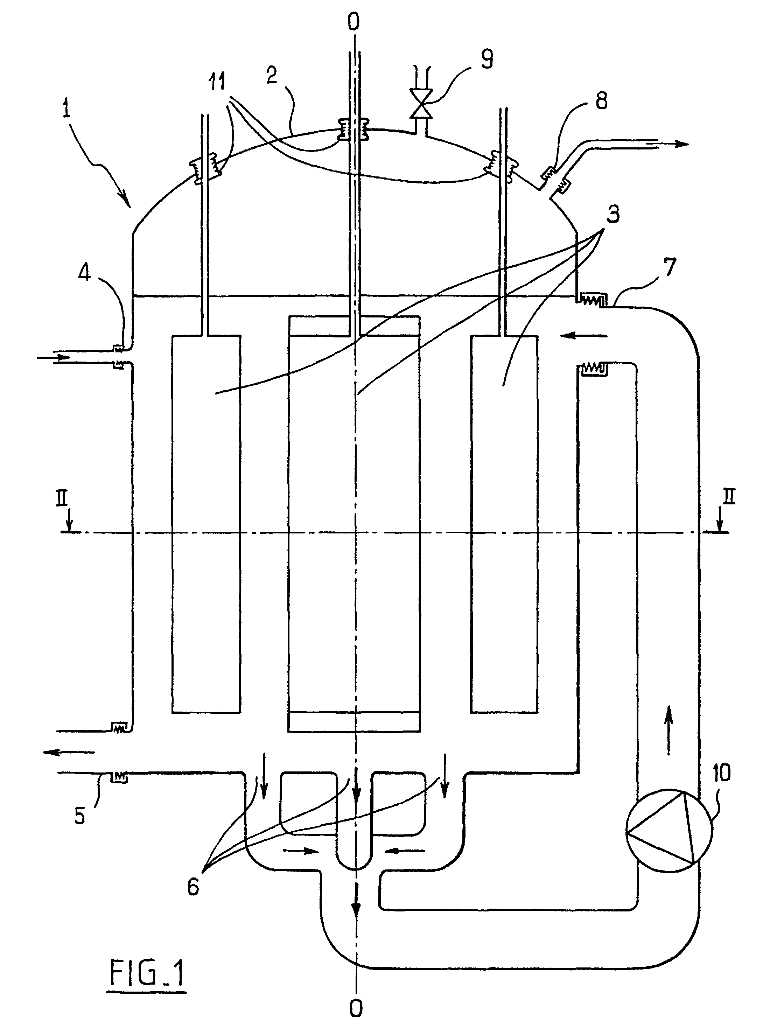

- la figure 1 représente une vue en coupe axiale d'un dispositif de concentration d'un mélange fluide selon la présente invention ; et,
- la figure 2 représente une vue en coupe transversale de ce même dispositif.

La structure selon l'invention est constituée d'une enceinte 1 pour contenir le mélange fluide à concentrer. Cette enceinte 1 a la forme d'une cuve cylindrique d'axe vertical O-O, fermée à une extrémité supérieure par un dôme démontable 2. Un ensemble d'électrodes 3 est suspendu au dôme 2 et s'étend à l'intérieur de l'enceinte 1.

L'enceinte 1 est percée de plusieurs ouvertures reliées à différentes conduites pour la circulation du mélange fluide.

. Une arrivée 4 est disposée près de l'extrémité supérieure de l'enceinte pour la remplir de fluide à concentrer.

Une sortie 5 est disposée près de l'extrémité inférieure de l'enceinte 1 pour soutirer le fluide concentré.

Trois ouvertures 6 sont disposées à l'extrémité inférieure de l'enceinte 1 pour la circulation et le brassage du fluide pendant sa concentration.

Trois conduites partant de ces ouvertures 6 se rejoignent pour former une conduite de circulation sur laquelle est disposée une pompe de circulation 10.

Pour recycler le fluide en circulation, une extrémité de la conduite de circulation est reliée à un retour 7 qui débouche à l'extrémité supérieure de l'enceinte 1.

Un conduit d'échappement de vapeur 8 est disposé sur le dôme 2. Une soupape de sûreté 9 est disposée sur le dôme 2 afin de limiter la pression régnant dans l'enceinte 1 qui est close.

De préférence, la pompe 10 de circulation a un débit supérieur d'une magnitude au débit d'alimention 4. En conséquence, la conduite de circulation a un diamètre supérieur à l'entrée 4.

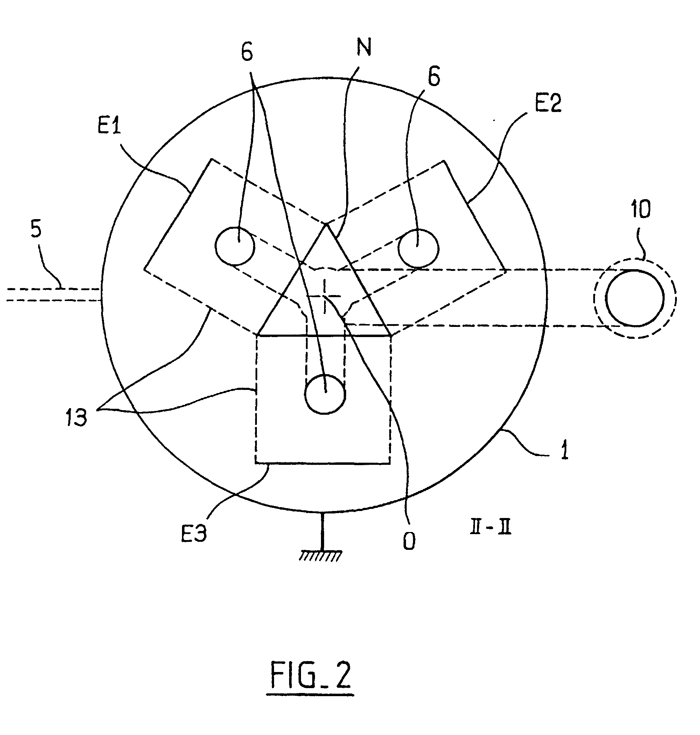

La figure 2 représente en détail la disposition de l'ensemble d'électrodes 3.

Dans ce mode de réalisation de l'invention, l'ensemble d'électrodes 3 est constitué de six plaques planes généralement métalliques. De préférence, les plaques ont la même dimension. Trois plaques sont reliées l'une à l'autre par leur bord pour former un prisme équilatère qui constitue une électrode de neutre N, disposée au centre de l'enceinte 2.

Chacune des trois autres plaques forme une électrode de phase E1, E2, E3 qui est disposée parallèlement face à la plaque homologue de l'électrode de neutre N.

Chaque électrode de phase E1, E2, E3 est alimentée par la phase correspondante d'une alimention triphasée. De préférence, l'alimention triphasée est fournie aux électrodes 3 par l'intermédiaire de transformateurs pour assurer l'isolement par rapport au réseau et l'adaptation de la tension.

Chaque électrode E1, E2, E3, N est fixée sur le dôme par une traversée de courant 11 qui la supporte au-dessus de l'enceinte 1. Les traversées de courant 11 maintiennent l'isolement de chaque électrode et l'étanchéité de l'enceinte 1.

En fonctionnement, les électrodes 3 sont immergées en partie dans le mélange fluide à concentrer et l'enceinte 1 est fermée.

Chaque électrode de phase E1, E2, E3 est alimentée par une phase d'alimention triphasée et des courants respectifs circulent depuis chaque électrode de phase E1, E2, E3 vers l'électrode de neutre N, à travers le mélange fluide.

Les dimensions des électrodes E1, E2, E3, N et la distance de séparation entre les électrodes de phase E1, E2, E3 et l'électrode de neutre ainsi que la tension triphasée appliquée sont adaptées pour la conductivité et la température du mélange fluide à concentrer.

Par effet Joule, chaque courant échauffe le volume de fluide compris entre chaque électrode de phase E1, E2, E3 et l'électrode de neutre N jusqu'à ce que la phase liquide soit portée à ébullition.

La phase liquide, généralement de l'eau, se vaporise et est évacuée par l'échappement 8.

Pour permettre le chauffage et la concentration de tout le volume de mélange fluide, une circulation est prévue par l'intermédiaire d'une pompe de circulation 10. La pompe 10 est disposée sur une conduite de circulation reliée aux orifices 6 à la partie inférieure de l'enceinte 1.

De manière générale, le procédé et le dispositif selon l'invention s'appliquent à la concentration de mélanges fluides qui comprennent une phase liquide et une phase non-volatile qui sont séparées par chauffage et évaporation.

Le terme "mélange fluide" désigne, dans la présente description, aussi bien une matière solide en suspension dans un liquide (boues, effluents industriels), qu'une émulsion (eau + huile, alcool + huile ...) de deux liquides ou une solution d'une matière soluble dans un solvant (par exemple un hydrocarbure). Dans tous les cas, le mélange doit être raisonnablement conducteur de l'électricité, de préférence dans une gamme de conductivité électrique d'environ 10⁻² à 10 S/m à 20°C.

Selon l'invention, on réalise un chauffage ohmique par conduction de courant électrique dans le mélange fluide maintenu en circulation.

Un certain volume de mélange fluide est traversé par du courant électrique. Ce mélange est généralement conducteur ou rendu tel. Ainsi, l'eau ou une huile, qui sont isolantes électriquement à l'état pur, présentent une forte conductivité une fois qu'un soluté leur a été ajouté, en particulier lorsqu'une solution ionique est formée. De même, un mélange ou une émulsion présente généralement une forte conductivité.

Le courant électrique provoque l'échauffement du mélange fluide, par effet Joule. Le volume de mélange fluide présente une résistance proportionnelle à la résistivité du mélange, proportionnelle à la dimension du volume dans la direction du courant et inversement proportionnelle à une section du volume traversée par le courant, la section étant perpendiculaire à la direction du courant.

Selon une caractéristique de l'invention, on règle le courant électrique en fonction inverse de la résistivité du mélange fluide. En effet, la puissance délivrée au volume de mélange fluide est proportionnelle à sa valeur de résistance, donc à sa résistivité, et proportionnelle au carré du courant. Pour maintenir une puissance constante, on diminue donc le courant lorsque la résistivité augmente.

De plus, le volume de mélange fluide est alors soumis à une tension qui varie dans un rapport plus faible que la résistivité.

Pour limiter l'apparition de phénomènes d'électrolyse dans le mélange fluide, le procédé selon l'invention prévoit, conformément à une caractéristique avantageuse, que le courant électrique utilisé est un courant alternatif.

Le dispositif selon l'invention comprend au moins deux électrodes 3 plongées, au moins en partie, dans le mélange fluide pour réaliser un chauffage ohmique par conduction de courant électrique à travers le mélange fluide en circulation entre les électrodes. Ainsi, chaque volume de mélange fluide, compris entre les surfaces de deux électrodes E1/N, E2/N, E3/N, est traversé par du courant qui le chauffe par effet Joule.

Deux modes de fonctionnement du dispositif selon l'invention sont envisageables.

Dans un premier mode de fonctionnement, le mélange fluide est contenu dans l'enceinte 1 et il n'est pas renouvelé au cours de l'opération de concentration. Le volume de mélange fluide diminue donc, au fur et à mesure que la phase liquide s'évapore et s'évacue par l'échappement 8.

La surface immergée des électrodes 3 et le volume de mélange fluide traversé par le courant électrique diminuent aussi en cours de concentration. Pour maintenir une densité de courant constante dans le mélange fluide, il faut diminuer l'intensité du courant électrique lorsque la surface immergée des électrodes 3 diminue. Cette diminution de la surface immergée allant de pair avec la concentration, soit avec l'augmentation de la résistivité du mélange fluide, le dispositif comprend, de façon caractéristique, un moyen de réglage du courant électrique en fonction inverse de la résistivité du mélange fluide.

Dans un second mode de fonctionnement, le mélange fluide est contenu dans l'enceinte 1 et il est renouvelé au cours de l'opération de concentration par introduction par l'orifice 4. Le soutirage s'effectue en continu par l'orifice 5 de telle façon que ce débit de soutirage soit égal à la différence entre le débit d'alimentation 4 moins le débit d'évaporation de la phase liquide évacuée par l'échappement 8. Il en résulte un niveau constant dans la cuve.

L'intensité électrique doit être réglée en permanence, en particulier au démarrage pendant lequel la concentration et la résistivité sont faibles, la résistivité du mélange variant en fonction de sa concentration.

Selon une caractéristique avantageuse de l'invention, ce moyen de réglage du courant électrique réalisant le chauffage ohmique comprend l'application d'une tension alternative réglable.

Conformément à une caractéristique de l'invention, on maintient en circulation le mélange fluide. Ainsi, le mélange fluide est chauffé uniformément et on évite la sédimentation d'une partie concentrée du mélange fluide ou la formation de dépôts.

Dans le mode de réalisation préféré du dispositif selon l'invention, la circulation du mélange fluide se fait verticalement vers la partie inférieure de l'enceinte 1. Le mélange fluide est pompé à la verticale des volumes chauffants E1/N, E2/N, E3/N (figure 2), chaque ouverture 6 se trouvant à la verticale du milieu de chaque paire d'électrode (E1, N ; E2, N ; E3, N).

Ainsi, la circulation s'oppose au mouvement naturel de convection du mélange fluide chauffé. Une agitation efficace du mélange fluide est alors obtenue. La pompe 10 propulse le mélange fluide vers une ouverture de retour 7 située à la partie supérieure de l'enceinte. Comme au cours de la concentration le niveau du mélange fluide baisse, le mélange fluide pompé retombe dans l'enceinte 1 en augmentant le brassage.

L'invention concerne aussi la disposition et la forme des électrodes 3.

L'application d'une tension alternative triphasée permet une disposition commode d'électrodes 3 dans l'enceinte 1 cylindrique.

De préférence, le dispositif selon l'invention comprend ainsi trois électrodes E1, E2, E3 disposées respectivement à chaque sommet d'un triangle et une phase respective d'un courant alternatif triphasé est appliquée à chaque électrode E1, E2, E3. Ainsi, les trois électrodes de phase E1, E2, E3 sont disposées face au centre O du triangle à une distance radiale fixée de l'axe central O-O de l'enceinte 1. Cette disposition est illustrée à la figure 2 où l'on voit que les électrodes de phase E1, E2, E3 sont régulièrement réparties à 120° face à l'axe O-O de l'enceinte cylindrique 1.

Cette disposition permet de former le schéma électrique triphasé connu, soit "en triangle", soit "en étoile".

Dans un schéma en triangle, des courants circulent dans le mélange fluide directement d'une électrode de phase à une autre électrode de phase E1-E2, E2-E3, E3-E1. Les volumes chauffants seront donc définis par les trois volumes compris entre deux surfaces d'électrodes E1/E2, E2/E3, E3/E1. Les électrodes pourront alors être des plaques courbes pour limiter l'intensité surfacique aux bords des électrodes.

Dans un schéma en étoile, les courants de chaque phase circulent de chaque électrode de phase E1, E2, E3 vers le centre O. Dans ce cas, conformément à une autre caractéristique avantageuse, le dispositif comprend une électrode de neutre N ou des électrodes de neutre connectées entre elles, disposées au centre des trois électrodes de phase E1, E2, E3. Cette disposition est la disposition complète des électrodes E1, E2, E3, N illustrée à la figure 2. Le neutre du transformateur d'alimentation n'est pas obligatoirement raccordé à l'électrode de neutre N.

Pour éviter des surintensités, le dispositif comprend, de préférence, des moyens de limitation de l'intensité surfacique du courant électrique à la surface des électrodes.

Un premier moyen de limitation de l'intensité surfacique est réalisé avec des électrodes en forme de plaques disposées face à face à distance constante.

De préférence, les électrodes sont planes et disposées parallèlement par paires. Ainsi, le courant se répartit sur la surface de chaque électrode E1, E2, E3, N et il n'apparaît pas de surintensité sur les bords d'électrodes E1, E2, E3, N car les surfaces sont équidistantes.

De façon avantageuse, le schéma électrique en étoile forme alors la disposition d'électrodes représentée à la figure 2 sur laquelle l'électrode de neutre N centrale est un trièdre équilatéral, formé de trois plaques d'électrodes soudées sur leurs arêtes, et les électrodes de phase E1, E2, E3 sont des plaques parallèles à chaque face du trièdre, disposées à une distance donnée du trièdre.

Un second moyen de limitation de l'intensité surfacique est réalisé avec des écrans d'isolement 13 disposés pour canaliser les lignes de courant.

De préférence, des écrans d'isolement 13, en matières isolantes, sont disposés entre chaque électrode de phase E1, E2, E3 et l'électrode de neutre N, en reliant chaque bord d'une électrode de phase E1, E2, E3 à une arête du prisme N, perpendiculairement aux plaques.

Ces écrans 13 évitent qu'un courant ne circule directement entre chaque paire d'électrodes de phase E1-E2, E2-E3, E3-E1 et évitent aussi l'accroissement des intensités sur les bords de plaque.

Ils servent également de structure de montage pour maintenir en place les plaques et fixer la distance entre les électrodes de chaque paire E1-N, E2-N, E3-N.

Si l'enceinte 1 est métallique, chaque électrode de phase E1,E2, E3 doit être séparée de l'enceinte 1 par une distance supérieure à la distance séparant une électrode de phase d'une électrode de neutre.

De plus, des écrans isolants peuvent alors être disposés sur chaque plaque d'électrode de phase, sur la surface en regard de l'enceinte 1, pour éliminer toute fuite de courant vers cette enceinte 1.

Une enceinte 1 métallique doit, bien entendu, être reliée à la terre.

De façon générale, toutes les électrodes E1, E2, E3, N, y compris l'électrode de neutre, sont isolées électriquement de l'enceinte 1 et de la terre du réseau.

Enfin, selon une dernière caractéristique de l'invention, l'enceinte 1 est hermétique et on peut ainsi travailler à des pressions subatmosphériques ou suratmosphériques. Cette disposition permet, par exemple, de faciliter l'ébullition de la phase liquide en dépressurisant l'enceinte.

## Revendications

1. Procédé de concentration d'un mélange fluide qui comprend une phase liquide et une phase non-volatile, dans lequel on élimine par chauffage au moins une partie de la phase liquide, **caractérisé en ce que** :
- on maintient le mélange fluide en circulation,
- au moyen d'électrodes plongées au moins en partie dans le mélange fluide, on réalise un chauffage ohmique par conduction de courant électrique à travers ce mélange fluide en circulation, et
- on règle le courant électrique en fonction inverse de la résistivité du mélange fluide.

2. Procédé selon la revendication 1, **caractérisé en ce que** le courant électrique est alternatif.

3. Procédé selon l'une des revendications 1 ou 2, **caractérisé en ce que** le courant électrique est triphasé.

4. Dispositif de concentration de mélange fluide qui comprend une phase liquide et une phase non-volatile, par mise en ébullition d'au moins une partie de la phase liquide, le dispositif comprenant
- une enceinte (1) pour contenir le mélange fluide,
- un moyen de mise en circulation (10) du mélange fluide, et
- au moins deux électrodes (3) pour réaliser un chauffage ohmique par conduction de courant électrique à travers le mélange fluide en circulation entre les électrodes (3),
**caractérisé en ce qu'**il comprend un moyen de réglage du courant électrique en fonction inverse de la résistivité du mélange fluide et en le que les électrodes sont plongées au moins en partie dans le mélange fluide.

5. Dispositif selon la revendication 4, **caractérisé en ce qu'**il comprend des moyens de limitation de l'intensité surfacique du courant électrique à la surface des électrodes.

6. Dispositif selon l'une des revendications 4 ou 5, **caractérisé en ce qu'**un moyen de limitation de l'intensité surfacique est réalisé par des électrodes en forme de plaques et disposées face à face à distance constante.

7. Dispositif selon l'une des revendications 4 à 6, **caractérisé en ce qu'**un moyen de limitation de l'intensité surfacique est réalisé par des écrans d'isolement (13) disposés pour canaliser les lignes de courant.

8. Dispositif selon l'une des revendications 4 à 7, **caractérisé en ce que** le moyen de réglage du courant électrique réalisant le chauffage ohmique comprend l'application d'une tension électrique alternative réglable.

9. Dispositif selon l'une des revendications 4 à 8, **caractérisé en ce qu'**il comprend trois électrodes (E1, E2, E3) disposées respectivement à chaque sommet d'un triangle et **en ce qu'**une phase respective d'un courant alternatif triphasé est appliquée à chaque électrode (E1, E2, E3).

10. Dispositif selon l'une des revendications 4 à 9, **caractérisé en ce qu'**il comprend une électrode de neutre (N) ou des électrodes de neutre connectées entre elles, disposées au centre de trois électrodes de phase (E1, E2, E3).

11. Dispositif selon l'une des revendications 4 à 10, **caractérisé en ce que** le moyen de mise en circulation du mélange fluide comprend une pompe (10).

12. Dispositif selon l'une des revendications 4 à 11, **caractérisé par** une enceinte (1) hermétique permettant un fonctionnement non atmosphérique.

## Claims

1. Method of concentrating a fluid mixture which comprises a liquid phase and a non-volatile phase, in which at least some of the liquid phase is removed by heating, **characterized in that**:
- the fluid mixture is kept in circulation;
- by means of electrodes at least partially immersed in the fluid mixture, resistance heating is carried out by conduction of electrical current through this circulating fluid mixture; and
- the electrical current is regulated according to an inverse function of the resistivity of the fluid mixture.

2. Method according to Claim 1, **characterized in that** the electrical current is an AC current.

3. Method according to either of Claims 1 and 2, **characterized in that** the electrical current is three-phase current.

4. Apparatus for concentrating a fluid mixture which comprises a liquid phase and a non-volatile phase, by boiling off at least some of the liquid phase, the apparatus comprising:
- an enclosure (1) for containing the fluid mixture;
- a means (10) for circulating the fluid mixture; and
- at least two electrodes (3) for carrying out resistance heating by conduction of electrical current through the circulating fluid mixture between the electrodes (3),
**characterized in that** it includes a means for regulating the electrical current as an inverse function of the resistivity of the fluid mixture and **in that** the electrodes are at least partially immersed in the fluid mixture.

5. Apparatus according to Claim 4, **characterized in that** it comprises means for limiting the surface intensity of the electrical current at the surface of the electrodes.

6. Apparatus according to either of Claims 4 and 5, **characterized in that** a means for limiting the surface intensity consists of plate-shaped electrodes arranged so as to face one another at a constant distance apart.

7. Apparatus according to one of Claims 4 to 6, **characterized in that** a means for limiting the surface intensity consists of insulation screens (13) arranged so as to channel the lines of current.

8. Apparatus according to one of Claims 4 to 7, **characterized in that** the means for regulating the electrical current producing the resistance heating comprises the application of an adjustable AC electrical voltage.

9. Apparatus according to one of Claims 4 to 8, **characterized in that** it comprises three electrodes (E1, E2, E3) placed respectively at each vertex of a triangle and **in that** a respective phase of a three-phase AC current is applied to each electrode (E1, E2, E3).

10. Apparatus according to one of Claims 4 to 9, **characterized in that** it includes a neutral electrode (N) or neutral electrodes connected together placed at the centre of three phase electrodes (E1, E2, E3).

11. Apparatus according to one of Claims 4 to 10, **characterized in that** the means for circulating the fluid mixture comprises a pump (10).

12. Apparatus according to one of Claims 4 to 11, **characterized by** a hermetically sealed enclosure (1) allowing non-atmospheric operation.

## Patentansprüche

1. Verfahren zum Konzentrieren einer flüssigen Mischung, die eine flüssige Phase und eine nichtflüchtige Phase aufweist, worin man durch Erwärmen mindestens einen Teil der flüssigen Phase entfernt, **dadurch gekennzeichnet, daß**
- man die flüssige Mischung in Umlauf hält,
- man mittels mindestens teilweise in die flüssige Mischung eingetauchter Elektroden eine ohmsche Beheizung durch Hindurchleiten von elektrischem Strom durch die in Umlauf befindliche, flüssige Mischung herstellt, und
- man den elektrischen Strom in umgekehrter Abhängigkeit vom spezifischen Widerstand der flüssigen Mischung einreguliert.

2. Verfahren nach Anspruch 1, **dadurch gekennzeichnet, daß** der elektrische Strom Wechselstrom ist.

3. Verfahren nach einem der Ansprüche 1 oder 2, **dadurch gekennzeichnet, daß** der elektrische Strom dreiphasig ist.

4. Vorrichtung zum Konzentrieren von flüssiger Mischung, die eine flüssige Phase und eine nichtflüchtige Phase aufweist, durch Verdampfen mindestens eines Teils der flüssigen Phase, wobei die Vorrichtung die folgenden Merkmale aufweist:
- einen Kessel (1) zum Aufnehmen der flüssigen Mischung,
- ein Mittel (10), um die flüssige Mischung in Umlauf zu versetzen, und
- mindestens zwei Elektroden (3), um eine ohmsche Beheizung durch Hindurchleiten von elektrischem Strom durch die in Umlauf befindliche, flüssige Mischung zwischen den Elektroden (3) herzustellen,
**dadurch gekennzeichnet, daß** sie ein Mittel zum Regulieren des elektrischen Stromes in umgekehrter Abhängigkeit vom spezifischen Widerstand der flüssigen Mischung aufweist, und daß die Elektroden mindestens teilweise in die flüssige Mischung eingetaucht sind.

5. Vorrichtung nach Anspruch 4, **dadurch gekennzeichnet, daß** sie Mittel zur Begrenzung der Oberflächenintensität des elektrischen Stromes an der Oberfläche der Elektroden aufweist.

6. Vorrichtung nach einem der Ansprüche 4 oder 5, **dadurch gekennzeichnet, daß** ein Mittel zur Begrenzung der Oberflächenintensität durch plattenförmige Elektroden hergestellt ist, die einander mit gleichem Abstand gegenüberliegend angeordnet sind.

7. Vorrichtung nach einem der Ansprüche 4 bis 6, **dadurch gekennzeichnet, daß** ein Mittel zur Begrenzung der Oberflächenintensität durch Isolierblenden (13) hergestellt ist, die angeordnet sind, um die Stromlinien zu kanalisieren.

8. Vorrichtung nach einem der Ansprüche 4 bis 7, **dadurch gekennzeichnet, daß** das Mittel zum Regulieren des elektrischen Stroms, der die ohmsche Beheizung ausführt, das Anlegen einer regulierbaren, elektrischen Wechselspannung aufweist.

9. Vorrichtung nach einem der Ansprüche 4 bis 8, **dadurch gekennzeichnet, daß** sie die Elektroden (E1, E2, E3) aufweist, die jeweils an jedem Scheitel eines Dreiecks angeordnet sind, und daß eine jeweilige Phase eines dreiphasigen Wechselstroms an jede Elektrode (E1, E2, E3) angelegt ist.

10. Vorrichtung nach einem der Ansprüche 4 bis 9, **dadurch gekennzeichnet, daß** sie eine neutrale Elektrode (N) oder neutrale Elektroden aufweist, die untereinander verbunden sind, die in der Mitte der drei Phasenelektroden (E1, E2, E3) angeordnet ist bzw. sind.

11. Vorrichtung nach einem der Ansprüche 4 bis 10, **dadurch gekennzeichnet, daß** das Mittel zum Versetzen der flüssigen Mischung in Umlauf eine Pumpe (10) aufweist,

12. Vorrichtung nach einem der Ansprüche 4 bis 11, **gekennzeichnet durch** einen hermetisch verschlossenen Kessel (1), der eine nicht-atmosphärische Wirkungsweise gestattet.
